# EUROPÄISCHE PATENTSCHRIFT

(11) **EP 3 578 832 B1**
(45) Veröffentlichungstag und Bekanntmachung des Hinweises auf die Patenterteilung: **29.09.2021**
(21) Anmeldenummer: 19177337.3
(22) Anmeldetag: 29.05.2019
(51) Int. Cl.: F16B 13/14, F16B 25/00, F16B 39/22

(54) **VERFAHREN ZUM ANORDNEN EINER PORENBETONSCHRAUBE IN PORENBETON, VERWENDUNG UND ANORDNUNG**
METHOD FOR ASSEMBLING A SCREW FOR POROUS CONCRETE, USE AND ASSEMBLY
PROCÉDÉ D'AGENCEMENT D'UNE VIS DE BÉTON CELLULAIRE DANS LE BÉTON CELLULAIRE, UTILISATION ET AGENCEMENT

(30) Priorität: 07.06.2018 DE 102018209027
(43) Veröffentlichungstag der Anmeldung: 11.12.2019
(73) Patentinhaber: Adolf Würth GmbH & Co. KG, 74653 Künzelsau (DE); Würth International AG, 7000 Chur (CH)
(72) Erfinder: Küenzlen, Jürgen, 71570 Oppenweiler (DE); Kuhn, Thomas, 74635 Kupferzell-Eschental (DE)
(74) Vertreter: Patentanwälte Ruff, Wilhelm, Beier, Dauster & Partner mbB

(56) Entgegenhaltungen:
- EP-A1- 2 581 611
- EP-A1- 3 301 225
- EP-A2- 2 233 757
- WO-A1-2012/152237
- US-A- 4 842 467

## Beschreibung

Die Erfindung betrifft ein Verfahren zum Anordnen einer Porenbetonschraube in Porenbeton, eine Verwendung des erfindungsgemäßen Verfahrens sowie eine Anordnung mit einem Mauerwerk oder einem Bauteil aus Porenbeton.

Porenbeton oder auch Gasbeton ist ein verhältnismäßig leichter, hochporöser, mineralischer Baustoff auf der Grundlage von Kalkmörtel, Kalkzementmörtel oder Zementmörtel, der durch Blähen eine poröse Struktur erhält und grundsätzlich einer Dampfhärtung unterzogen wird. Es handelt sich dabei nicht um einen Beton nach der üblichen Begriffsdefinition, denn Porenbeton enthält keine Gesteinskörnung wie Sand oder Kies. Zur Herstellung wird fein vermahlener quarzhaltiger Sand in Form von Gesteinsmehl verwendet, der zu einem großen Teil an den chemischen Umsetzungen teilnimmt. Porenbeton existiert in verschiedenen Festigkeitsklassen und kann eine Rohdichte von 200 kg/m³ bis 800 kg/m³ aufweisen. Porenbeton kann vergleichsweise leicht mechanisch bearbeitet werden, bspw. durch Bohren und Sägen.

Aus der deutschen Offenlegungsschrift DE 10 2009 005 916 A1 ist eine Porenbetonschraube bekannt. Porenbeton, auch Gasbeton genannt, ist ein leichter, poröser, mineralischer Kalksandstein auf der Grundlage von Kalkmörtel, Kalkzementmörtel oder Zementmörtel. Aufgrund seiner geringen Belastbarkeit ist die Befestigung von Gegenständen mittels Schrauben problematisch.

Aus der europäischen Offenlegungsschrift EP 0 955 476 A1 ist eine Betonschraube bekannt, die sich ihr Gewinde in Beton selbst schneidet. Ein für die Betonschraube gebohrtes Bohrloch hat einen Innendurchmesser, der größer ist als der Kerndurchmesser des Schafts der Betonschraube, aber kleiner als der Außendurchmesser des Gewindes der Betonschraube. Vor dem Eindrehen der Schraube wird das Bohrloch mit einem aushärtbaren Klebstoff befüllt. Beim Eindrehen der Schraube schneidet das Gewinde ein Gegengewinde in der Innenwand des Bohrlochs. Nach dem Aushärten der Masse ist das Gewinde teilweise in Beton und teilweise in der ausgehärteten Mörtelschale eingebettet.

Die internationale Offenlegungsschrift WO 2012/152237 A1 betrifft eine Verbundankerschraube, die unter anderem in Gasbeton eingesetzt werden kann. Zum Einsetzen der Verbundankerschraube kann ein Bohrloch gebohrt werden, wobei der Innendurchmesser des Bohrlochs gleich oder größer einem Kerndurchmesser des Schafts der Verbundankerschraube ist, so dass sich entweder nur die Spitzen der Gewindegänge in die Wandung der Bohrung eingraben oder sich die Gewindegänge vollständig in die Wandung der Bohrung eingraben. Das Bohrloch wird mit einem Klebstoff versehen. Die Verbundankerschraube wird dann in das Bohrloch eingeschraubt, so dass der Kleber im Bohrloch verteilt wird und freie Räume zwischen der Verbundankerschraube und der Bohrlochwandung mit dem Klebstoff ausgefüllt sind. Die Verbundankerschraube wird mittels des Klebstoffs mit der Bohrlochwandung verklebt. Beim Einschrauben der Verbundankerschraube kann der Klebstoff entgegen der Setzrichtung der Verbundankerschraube in Richtung Bohrungsöffnung gedrückt werden, wobei sich der Klebstoff gleichmäßig in der Bohrung verteilt.

Aus der europäischen Offenlegungsschrift EP 3 301 225 A1 ist eine Betonschraube bekannt, die in ein Bohrloch in Beton eingeschraubt werden soll, wobei der Bohrlochdurchmesser so bemessen ist, dass sich das Gewinde der Betonschraube teilweise in die Bohrlochwandung eingräbt. Vor dem Eindrehen der Betonschraube wird ein Kleber in das hergestellte Bohrloch eingeführt. Während des Einschraubens der Betonschraube können Fragmentierungen in dem Bohrloch entstehen. Der Kleber kriecht dann in diese Fragmentierung, so dass die Betonschraube formschlüssig in dem Bohrloch gehalten ist. Der Kleber verklebt auch die Außenmantelfläche der Betonschraube mit der Innenmantelfläche des Bohrlochs.

Mit der Erfindung sollen ein Verfahren zum Anordnen einer Porenbetonschraube in Porenbeton, eine Verwendung des erfindungsgemäßen Verfahrens sowie eine Anordnung hinsichtlich der Verankerung von Porenbetonschrauben in Porenbeton hinsichtlich der erzielbaren Auszugskräfte und Haltekräfte verbessert werden.

Erfindungsgemäß sind hierzu ein Verfahren mit den Merkmalen von Anspruch 1, eine Verwendung des erfindungsgemäßen Verfahrens mit den Merkmalen von Anspruch 7 und eine Anordnung mit den Merkmalen von Anspruch 8 vorgesehen. Vorteilhafte weitere Merkmale der Erfindung sind in den Unteransprüchen angegeben.

Bei einem Verfahren zum Anordnen einer Porenbetonschraube in Porenbeton sind folgende Schritte vorgesehen: Bohren eines Bohrlochs in dem Porenbeton, wobei der Innendurchmesser des Bohrlochs kleiner oder gleich einem Kerndurchmesser eines Schafts der Porenbetonschraube ist, wenigstens teilweises Auffüllen des Bohrlochs mit einem fließfähigen Kleber, wobei der Kleber so dünnflüssig ist, dass er in die Poren des Porenbetons eingepresst werden kann, wenigstens teilweises Eindrehen der Schraube in das Bohrloch, so dass der fließfähige Kleber mittels der Porenbetonschraube wenigstens teilweise aus dem Bohrloch verdrängt wird und im Wesentlichen radial zum Bohrloch in das Bohrloch radial umgebende Bereiche des Porenbetons eingepresst wird und dort aushärtet.

Zum einen wird dadurch, dass der fließfähige Kleber in das Bohrloch radial umgebende Bereiche des Porenbetons eingepresst wird und dort aushärtet, der Porenbeton in diesen Bereichen durch den ausgehärteten Kleber verstärkt. Dies führt zu einer festeren, also höher belastbaren Verankerung der Porenbetonschraube, da diese nun in einem gegenüber Porenbeton ohne ausgehärteten Kleber festeren Untergrund steckt. Darüber hinaus wird die Porenbetonschraube auch noch mit dem Porenbeton verklebt, also stoffschlüssig mit dem Porenbeton verbunden, da an den Stellen der Bohrlochwand und des in den Porenbeton geschnittenen Gegengewindes, an denen Klebstoff vorhanden ist, ein Klebekontakt oder eine stoffschlüssige Verbindung zwischen dem Klebstoff und der Porenbetonschraube auftritt. Im Ergebnis können wesentlich höhere Auszugskräfte von Porenbetonschrauben in Porenbeton und allgemein wesentlich höhere Haltekräfte einer Porenbetonschraube im Porenbeton erzielt werden.

Der Kleber oder Klebstoff kann dabei als Einkomponentenkleber oder auch als Mehrkomponentenkleber ausgebildet sein. Wesentlich ist, dass der Klebstoff während des Eindrehens der Schraube in die Poren des Porenbetons eindringen kann. Der Klebstoff darf infolgedessen nicht zu zähflüssig sein. Darüber hinaus muss der Klebstoff von der Schraube beim Eindrehen der Schraube in radialer Richtung verdrängbar sein. Schließlich muss der Klebstoff so ausgebildet sein, dass er im Porenbeton aushärten kann.

In Weiterbildung der Erfindung wird das Bohrloch vor dem Eindrehen der Porenbetonschraube zwischen 50 % und 100 %, insbesondere zu 75 % oder zu 100 %, mit dem Kleber befüllt. Indem das Bohrloch zu wenigstens 50 % mit einem Kleber befüllt wird, kann sichergestellt werden, dass beim Eindrehen der Porenbetonschraube der Kleber nicht lediglich im Bohrloch verbleibt, sondern durch das Eindrehen der Porenbetonschraube wenigstens teilweise aus dem Bohrloch verdrängt wird. Es hat sich herausgestellt, dass der Kleber zum größten Teil radial zum Bohrloch in das Bohrloch radial umgebende Bereiche des Porenbetons verdrängt wird. Wird das Bohrloch zu 100 % mit dem Kleber befüllt, so wird der Kleber bereits unmittelbar zu Beginn des Einschraubvorgangs in das Bohrloch radial umgebende Bereiche des Porenbetons eingepresst. Damit kann über die gesamte Länge des Bohrlochs sichergestellt werden, dass der Kleber in das Bohrloch umgebende Bereiche des Porenbetons eingepresst wird, dort aushärtet und dadurch den Porenbeton in den das Bohrloch umgebenden Bereichen verstärkt und zusätzlich eine stoffschlüssige Verbindung zwischen der Porenbetonschraube und dem Klebstoff über die gesamte im Porenbeton angeordnete Länge der Porenbetonschraube auftritt.

In Weiterbildung der Erfindung ist der Kleber so dünnflüssig, dass er ohne zusätzlichen Pressdruck abschnittsweise in den Porenbeton eindringen kann.

Dies erleichtert das Einpressen des Klebers in das Bohrloch radial umgebende Bereiche des Porenbetons.

In Weiterbildung der Erfindung ist der Kleber ein Zweikomponentenkleber.

Zweikomponentenkleber härten zuverlässig in Porenbeton aus. Solche Zweikomponentenkleber werden auch als Zweikomponentenmörtel bezeichnet.

In Weiterbildung der Erfindung ist der Innendurchmesser des Bohrlochs 10 % bis 20 % kleiner als der Kerndurchmesser des Schafts der Porenbetonschraube.

Beispielsweise kann vor dem Eindrehen einer Porenbetonschraube mit einem Kerndurchmesser von 9 mm ein Bohrloch mit einem Innendurchmesser von 8 mm gebohrt werden. Beim Einschrauben der Porenbetonschraube wird der Innendurchmesser des Bohrlochs dadurch erweitert. Dies führt neben dem Einpressen des Klebers in das Bohrloch radial umgebende Bereiche des Porenbetons auch zu einer Verdichtung des Porenbetons in den das Bohrloch radial umgebenden Bereichen. Dadurch kann die Verankerung der Porenbetonschraube in dem Porenbeton weiter verbessert werden.

Das erfindungsgemäße Verfahren wird vorteilhafterweise zum Befestigen von Gegenständen mittels wenigstens einer Porenbetonschraube an einem Mauerwerk oder an einem Bauteil aus Porenbeton verwendet.

Durch die mittels der Erfindung verbesserte Verankerung von Porenbetonschrauben in Porenbeton können beim Befestigen von Gegenständen weniger Schrauben verwendet werden oder es können schwerere Gegenstände als bisher befestigt werden. Gegenüber konventionellen Verfahren zum Befestigen von Gegenständen an Porenbeton können somit auch die Abstände der einzelnen Porenbetonschrauben untereinander vergrößert werden.

Das der Erfindung zugrunde liegende Problem wird auch durch eine Anordnung mit einem Mauerwerk oder einem Bauteil aus Porenbeton, einer Porenbetonschraube, die in ein Bohrloch in dem Porenbeton eingeschraubt ist, wobei vor dem Einschrauben der Porenbetonschraube in das Bohrloch ein Innendurchmesser des Bohrlochs kleiner oder gleich einem Kerndurchmesser eines Schafts der Porenbetonschraube ist, und einem Kleber gelöst, der nach dem Einfüllen in das Bohrloch beim Eindrehen der Porenbetonschraube im noch flüssigen Zustand wenigstens teilweise aus dem Bohrloch verdrängt wurde und im wenigstens teilweise eingeschraubten Zustand der Porenbetonschraube im ausgehärteten Zustand in die Poren des Porenbetons eingedrungen ist und in Bereichen des Porenbetons angeordnet ist, die das Bohrloch radial umgeben.

Weitere Merkmale und Vorteile der Erfindung ergeben sich aus der nachfolgenden Beschreibung im Zusammenhang mit den Zeichnungen. Einzelmerkmale aus der Beschreibung oder den Zeichnungen können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang beschrieben oder gezeigt sind. In den Zeichnungen zeigen:
- Fig. 1: eine abschnittsweise Darstellung einer Porenbetonschraube,
- Fig. 2: eine Schnittansicht der Porenbetonschraube der Fig. 1,
- Fig. 3: ein Bauteil aus Porenbeton mit einem darin angeordneten Bohrloch in einer schematischen Schnittansicht,
- Fig. 4: das Bauteil der Fig. 3, wobei das Bohrloch mit Kleber befüllt ist,
- Fig. 5: eine Anordnung mit dem Bauteil der Fig. 4 und einer in das Bohrloch eingedrehten Porenbetonschraube in einer schematischen Schnittansicht und
- Fig. 6: eine weitere schematische Darstellung einer Anordnung mit einer Porenbetonschraube und einem Bauteil aus Porenbeton.

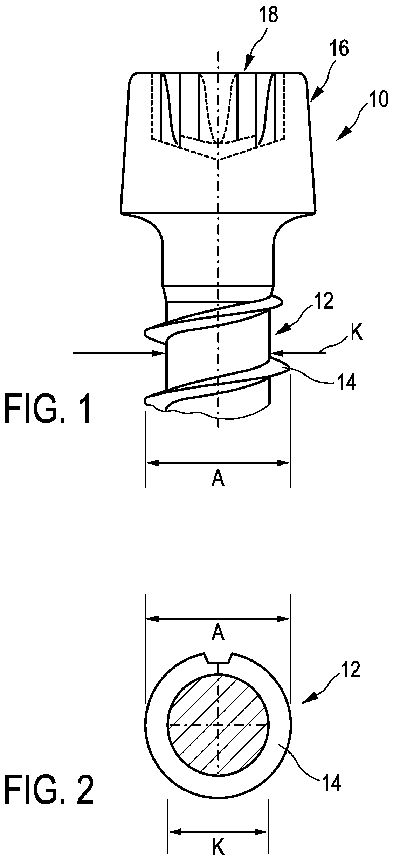

Fig. 1 zeigt abschnittsweise eine konventionelle Porenbetonschraube 10. Die Porenbetonschraube 10 weist einen Schaft 12 mit einem Gewinde 14 und einen Kopf 16 mit einer Antriebsausbildung 18 auf. Ein Kerndurchmesser des Schafts 12 ist mit dem Buchstaben K bezeichnet. Der Kerndurchmesser K ist ersichtlich kleiner als ein Außendurchmesser A des Schafts 12. Der Außendurchmesser A ergibt sich aus der Summe des Kerndurchmessers K und zweimal der Höhe der Gewindeflanken des Gewindes 14.

Fig. 2 zeigt eine Schnittansicht des Schafts 12 der Porenbetonschraube 10 der Fig. 1. Der Kerndurchmesser K ist eingezeichnet, das Gewinde 14 ist angedeutet, das den Außendurchmesser A des Schafts 12 bestimmt.

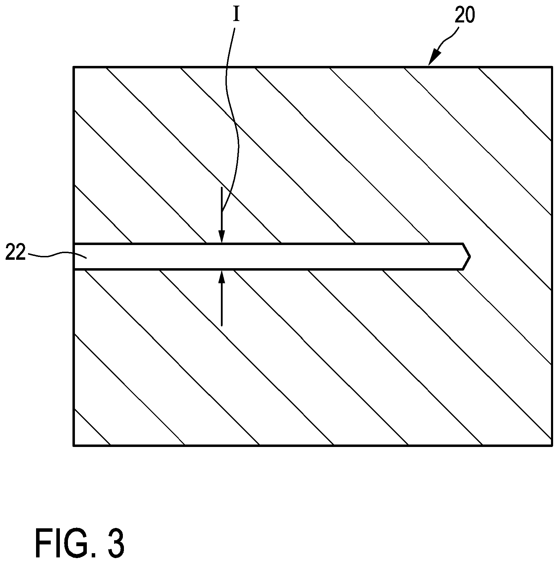

Fig. 3 zeigt eine schematische Schnittansicht eines Bauteils 20 aus Porenbeton. Porenbeton, auch Gasbeton genannt, ist ein verhältnismäßig leichter, hochporöser, mineralischer Baustoff auf der Grundlage von Kalkmörtel, Kalkzementmörtel oder Zementmörtel, der durch Blähen porosiert und grundsätzlich einer Dampfhärtung unterzogen wird. Es handelt sich bei Porenbeton nicht um Beton im Sinne der Definition des Begriffs "Beton". Porenbeton enthält keine Gesteinskörnung wie Sand oder Kies. Fein vermahlener quarzhaltiger Sand, sogenanntes Sandmehl, der als Rohstoff eingesetzt wird, ist eine Komponente, die zu einem großen Teil an den bei der Herstellung von Porenbeton erforderlichen chemischen Umsetzungen teilnimmt. Porenbeton gehört zu den dampfgehärteten Baustoffen. Porenbeton ist auch deshalb keine Betonvariante, weil eine Dampfbehandlung mit gesättigtem Wasserdampf unerlässlich ist. Porenbeton muss weiterhin nicht die Bestandteile von Beton enthalten.

Das Bauteil 20 ist mit einem Bohrloch 22 versehen, das kreiszylindrisch ausgebildet ist und einen Innendurchmesser I aufweist. Das Bohrloch 22 ist zum Einschrauben der Porenbetonschraube 10 der Fig. 1 und 2 vorgesehen. Der Innendurchmesser I ist so bemessen, dass er kleiner oder gleich dem Kerndurchmesser K der Porenbetonschraube 10 ist. Vorteilhafterweise ist der Innendurchmesser I des Bohrlochs 22 zwischen 10 % und 20 % kleiner als der Kerndurchmesser K des Schafts 12 der Porenbetonschraube 10.

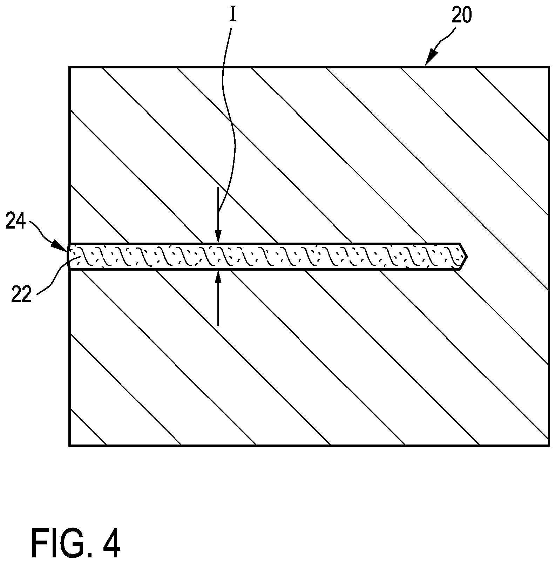

Fig. 4 zeigt das Bauteil 20 der Fig. 3, wobei das Bohrloch 22 vollständig mit einem flüssigen Kleber 24 befüllt wurde. Der Kleber 24 wird im flüssigen Zustand in das Bohrloch 22 eingefüllt und ist vorteilhafterweise als Zweikomponentenkleber ausgebildet. Der Kleber 24 kann dadurch im Porenbeton aushärten.

Der Kleber 24 ist vorteilhafterweise so dünnflüssig, dass er ohne zusätzlichen Pressdruck abschnittsweise in den Porenbeton eindringen kann. Ausgehend vom Zustand der Fig. 4 wird der flüssige Kleber 24 also bereits abschnittsweise in das Bohrloch 22 umgebende Bereiche des Bauteils 20 aus Porenbeton eindringen.

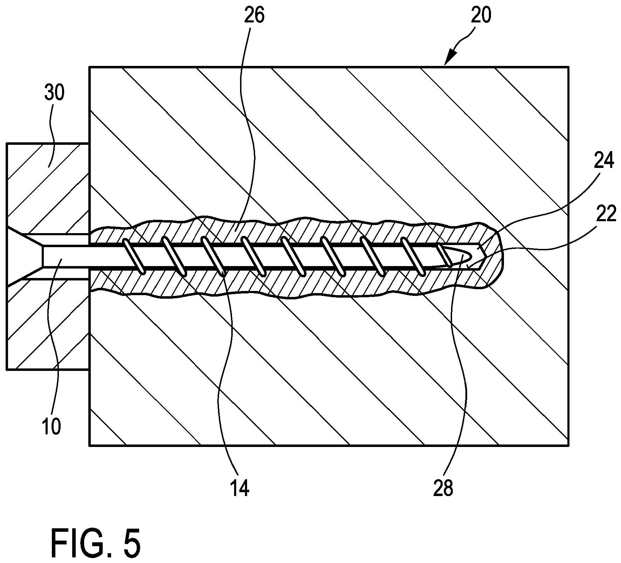

Fig. 5 zeigt eine Schnittansicht des Bauteils 20 der Fig. 3 und 4, wobei eine schematisch dargestellte Porenbetonschraube 10, wie sie abschnittsweise in den Fig. 1 und 2 dargestellt ist, in das Bohrloch 22 eingeschraubt wurde. Die Porenbetonschraube 10 wird dazu verwendet, einen Gegenstand 30, beispielsweise eine Holzlatte, an dem Bauteil 20 zu befestigen.

Beim Einschrauben der Porenbetonschraube 10 in das Bohrloch 22 wird der Klebstoff 24 zu Beginn des Einschraubvorgangs zunächst unter Druck gesetzt. Da das Bohrloch 22, vgl. Fig. 4, vollständig mit dem flüssigen Kleber 24 gefüllt ist, wird der Kleber 24 bereits unmittelbar nach Beginn des Einschraubens durch die Porenbetonschraube 10 unter Druck gesetzt. Aufgrund der Dünnflüssigkeit des Klebers 24 und der Porosität des Porenbetons des Bauteils 20 wird der Kleber 24 dadurch aus dem Bohrloch 22 verdrängt und in das Bohrloch umgebende Bereiche 26 eingepresst. Die Verdrängung des Klebers 24 aus dem Bohrloch 22 findet deshalb zwangsläufig statt, da der Innendurchmesser I des Bohrlochs 22 kleiner oder gleich dem Kerndurchmesser K des Schafts der Porenbetonschraube 10 ist. Wie Fig. 5 zu entnehmen ist, erfolgt die Verdrängung des Klebers 24 in das Bohrloch 22 umgebende Bereiche im Wesentlichen radial. Die das Bohrloch 22 radial umgebenden Bereiche 26 des Bauteils 20 aus Porenbeton werden dadurch, nachdem der in diese Bereiche 26 eingedrungene Kleber ausgehärtet ist, erheblich verstärkt. Dadurch ist die Verankerung der Porenbetonschraube 10 in dem Bauteil 20 wesentlich verbessert, da das Gewinde 14 der Porenbetonschraube 10 nun in die Bereiche 26 eingreift, die durch den ausgehärteten Kleber 24 wesentlich verstärkt sind. Wird der Innendurchmesser I des Bohrlochs 22 zwischen 10 % und 20 % kleiner gewählt als der Kerndurchmesser K der Porenbetonschraube 10, so wird der Porenbeton in den das Bohrloch radial umgebenden Bereichen 26 zusätzlich verdichtet. Dies trägt zu einer weiteren Verfestigung des Porenbetons in den Bereichen 26 und dadurch zu einer weiter verbesserten Verankerung der Porenbetonschraube 10 bei. Darüber hinaus tritt in den Kontaktbereichen, in denen also das Gewinde 14 und der Schaft der Porenbetonschraube 10 an den Bereichen 26 anliegen, eine stoffschlüssige Verbindung zwischen der Porenbetonschraube 10 und dem dann ausgehärteten Kleber 24 auf. Die Porenbetonschraube 10 wird also zusätzlich in das Bohrloch eingeklebt.

Fig. 5 ist zu entnehmen, dass auch vor dem Ende 28 der Porenbetonschraube 10, also in Richtung auf das Ende des Bohrlochs 22 zu, der Kleber 24 noch in den Porenbeton eingedrungen ist. Bei Einschrauben der Porenbetonschraube 10 wird der flüssige Kleber 24 nicht nur radial aus dem Bohrloch herausgepresst, sondern zwangsläufig auch in axialer Richtung mit einem Druck beaufschlagt. Dies führt dazu, dass auch der sich an das Ende des Bohrlochs 22 anschließende Bereich und auch der unmittelbar vor dem Ende des Bohrlochs das Bohrloch radial umgebende Bereich durch eingedrungenen und ausgehärteten Kleber verstärkt ist.

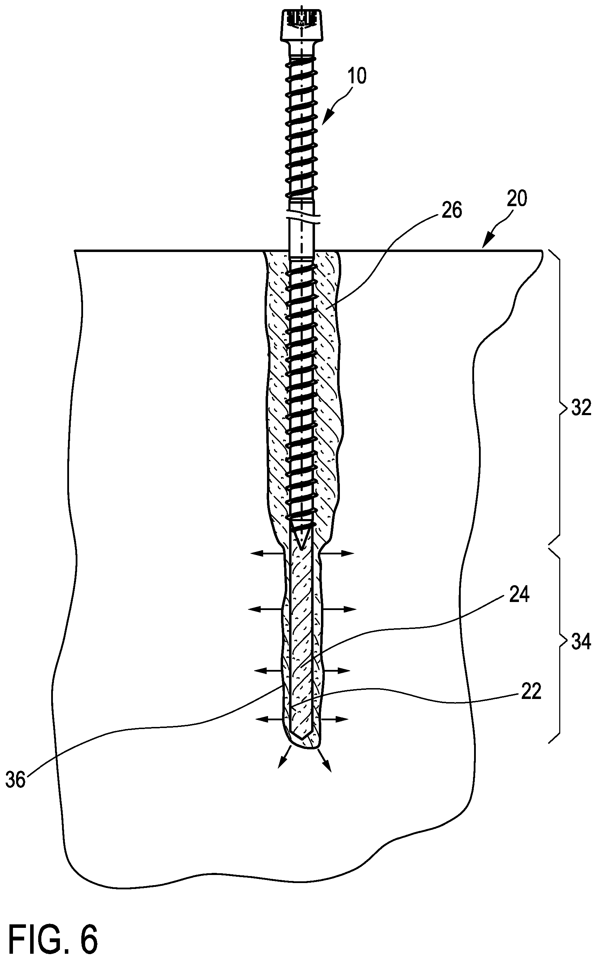

Fig. 6 zeigt eine weitere schematische Schnittansicht eines Bauteils 20 aus Porenbeton mit einem Bohrloch 22, das vor dem Einschrauben der Porenbetonschraube 10 mit flüssigem Kleber gefüllt wurde. Die Porenbetonschraube 10 ist im Zustand der Fig. 6 bereits teilweise in das Bohrloch 22 eingeschraubt worden. Der Innendurchmesser des Bohrlochs 22 ist kleiner gewählt oder gleich gewählt wie der Kerndurchmesser des Schafts der Porenbetonschraube 10. In einem Bereich 32, in dem der Schaft der Porenbetonschraube 10 im Bohrloch 22 angeordnet ist, wurde der flüssige Kleber 24 in das Bohrloch 22 radial umgebende Bereiche des Bauteils 20 verdrängt. In diesen Bereichen 26 ist der Porenbeton durch den eingepressten Kleber, der dann aushärtet, wesentlich verstärkt. Zusätzlich wird der Schaft der Porenbetonschraube 10 mit dem Kleber 26 und damit dem Bauteil 20 verklebt.

In einem Bereich 34 des Bohrlochs 22, der vor dem Ende der Porenbetonschraube 10 liegt, ist der Kleber 24 noch im Bohrloch 22 angeordnet und füllt das Bohrloch 22 im Bereich 34 vollständig aus. Durch das Eindrehen der Porenbetonschraube steht aber auch der Kleber 24 innerhalb des Bohrlochs 22 unter Druck. Auch in dem Bereich 34 wird der flüssige Kleber 24 somit ein Stück weit in den Porenbeton des Bauteils 20 verdrängt. Dies ist durch Bereiche 36 angedeutet, die das Bohrloch 22 in dem Bereich, in dem die Porenbetonschraube 10 nicht angeordnet ist, in radialer Richtung und auch in axialer Richtung umgeben. Der auf den Kleber 24 im Bereich 34 des Bohrlochs 22 ausgeübte Druck ist in Fig. 6 durch Pfeile angedeutet.

Durch Einsatz des Klebers 24 und auch die Dimensionierung des Bohrlochs mit einem Innendurchmesser I, der kleiner oder gleich dem Kerndurchmesser K der Porenbetonschraube 10 ist, wird die Auszugskraft der Porenbetonschraube 10 aus dem Porenbeton deutlich erhöht, allgemein wird die Verankerung der Porenbetonschraube 10 im Porenbeton wesentlich verbessert. Dabei wird der Kleber 24 hauptsächlich radial in den Porenbeton eingepresst, dies aufgrund der Porosität des Porenbetons. Hierin liegt ein entscheidender Unterschied zum Verkleben von Betonschrauben in Beton. Da Beton nicht porös ist, lässt Beton ein Fließen des Mörtels oder Klebers in radialer Richtung in den Beton nicht zu. Da der Kerndurchmesser des Schafts der Porenbetonschraube kleiner oder gleich dem Innendurchmesser des Bohrlochs ist, liegt der Schaft der Porenbetonschraube 10 bündig an der Innenwand des Bohrlochs 22 an. In den Hohlräumen des Porenbetons an der Bohrlochwand befindlicher Kleber kommt dadurch in Kontakt mit dem Schaft und/oder dem Gewinde der Porenbetonschraube 10, wodurch die Schraube auch chemisch, also stoffschlüssig, in dem Bohrloch befestigt wird. Darüber hinaus greift das Gewinde der Porenbetonschraube auch in den Porenbeton ein. Neben der stoffschlüssigen Befestigung wird somit auch eine mechanische Befestigung der Porenbetonschraube in dem Porenbeton erreicht. Diese mechanische Befestigung ist gegenüber herkömmlichen Verfahren, bei denen kein Kleber verwendet wird, wesentlich verbessert, da der Porenbeton durch den ausgehärteten Kleber in den das Bohrloch radial umgebenden Bereichen wesentlich verstärkt ist. Die Porenbetonschraube ist somit fester als ohne Verwendung des Klebstoffs im Porenbeton gehalten. Damit können durch das erfindungsgemäße Verfahren deutlich höhere Haltekräfte erzielt werden als wenn kein Kleber eingesetzt wird.

## Patentansprüche

1. Verfahren zum Anordnen einer Porenbetonschraube (10) in Porenbeton mit folgenden Schritten: Bohren eines Bohrlochs (22) in dem Porenbeton, wobei der Innendurchmesser (I) des Bohrlochs (22) kleiner oder gleich einem Kerndurchmesser (K) eines Schafts der Porenbetonschraube (10) ist, wenigstens teilweises Auffüllen des Bohrlochs (22) mit einem fließfähigen Kleber (24), wobei der Kleber (24) so dünnflüssig ist, dass er in die Poren des Porenbetons eingepresst werden kann, wenigstens teilweises Eindrehen der Porenbetonschraube (10) in das Bohrloch, so dass der fließfähige Kleber (24) mittels der Porenbetonschraube (10) wenigstens teilweise aus dem Bohrloch (22) verdrängt wird und im Wesentlichen radial zum Bohrloch (22) in das Bohrloch (22) radial umgebende Bereiche (26) des Porenbetons eingepresst wird und dort aushärtet, wodurch die das Bohrloch (22) radial umgebenden Bereiche (26) erheblich verstärkt werden und wodurch die Verankerung der Porenbetonschraube (10) wesentlich verbessert ist, da ein Gewinde (14) der Porenbetonschraube (10) in die Bereiche (26) eingreift, die durch den ausgehärteten Kleber (24) wesentlich verstärkt sind.

2. Verfahren nach Anspruch 1, wobei das Bohrloch (22) vor dem Eindrehen der Porenbetonschraube (10) zwischen 50% und 100%, insbesondere zu 75% oder zu 100%, mit dem Kleber (24) befüllt wird.

3. Verfahren nach Anspruch 1 oder 2, wobei der Kleber (24) so dünnflüssig ist, dass er ohne zusätzlichen Pressdruck abschnittsweise in den Porenbeton eindringen kann.

4. Verfahren nach einem der vorstehenden Ansprüche, wobei der Kleber (24) ein ZweiKomponenten Kleber ist.

5. Verfahren nach einem der vorstehenden Ansprüche, wobei der Innendurchmesser (I) des Bohrlochs 10 % bis 20% kleiner ist als der Kerndurchmesser (K) des Schafts (12) der Porenbetonschraube (10).

6. Verfahren nach wenigstens einem der vorstehenden Ansprüche, **gekennzeichnet durch** Verdichten des Porenbetons in dem die Porenbetonschraube (10) unmittelbar umgebenden Bereich beim Eindrehen der Porenbetonschraube (10) in das Bohrloch.

7. Verwendung des Verfahrens nach wenigstens einem der vorstehenden Ansprüche zum Befestigen von Gegenständen (30) mittels wenigstens einer Porenbetonschraube (10) an einem Mauerwerk oder an einem Bauteil (20) aus Porenbeton.

8. Anordnung mit einem Mauerwerk aus Porenbeton oder einem Bauteil aus Porenbeton, einer Porenbetonschraube (10), die in ein Bohrloch (22) in dem Porenbeton eingeschraubt ist, wobei vor dem Einschrauben der Porenbetonschraube (10) in das Bohrloch ein Innendurchmesser (I) des Bohrlochs (22) kleiner oder gleich einem Kerndurchmesser (K) eines Schafts der Porenbetonschraube (10) ist, und einem Kleber (24), der nach dem Einfüllen in das Bohrloch (22) beim Eindrehen der Porenbetonschraube (10) im noch flüssigen Zustand wenigstens teilweise aus dem Bohrloch (22) verdrängt wurde und im wenigstens teilweise eingeschraubten Zustand der Porenbetonschraube (10) im ausgehärteten Zustand in die Poren des Porenbetons eingedrungen ist und in Bereichen (26) des Porenbetons angeordnet ist, die das Bohrloch (22) radial umgeben, wodurch die das Bohrloch (22) radiale umgebenden Bereiche (26) erheblich verstärkt sind und wodurch die Verankerung der Porenbetonschraube (10) wesentlich verbessert ist, da ein Gewinde (14) der Porenbetonschraube (10) in die Bereiche (26) eingreift, die durch den ausgehärteten Kleber wesentlich verstärkt sind.

9. Anordnung nach Anspruch 8, wobei die Porenbetonschraube (10) über ihre gesamte, im Bohrloch (22) befindliche Länge mit einer Wand des Bohrlochs verklebt ist.

10. Anordnung nach Anspruch 8 oder 9, wobei im eingeschraubten Zustand der Porenbetonschraube (10) das Bohrloch über seine gesamte Länge vollständig von Kleber (24) umgeben ist, der in den Porenbeton eingedrungen und dort ausgehärtet ist.

## Claims

1. Method for the arrangement of a porous concrete screw (10) in porous concrete with the following steps: drilling of a drilled hole (22) in the porous concrete, wherein the internal diameter (I) of the drilled hole (22) is smaller than, or equal to, a core diameter (K) of a shank of the porous concrete screw (10), at least partial filling of the drilled hole (22) with a flowable adhesive (24), wherein the adhesive (24) is so inviscid that it can be pressed into the pores of the porous concrete, at least partial screwing of the porous concrete screw (10) into the drilled hole, so that the flowable adhesive (24) is at least partially displaced from the drilled hole (22) by means of the porous concrete screw (10), and is pressed, substantially radially with respect to the drilled hole (22), into regions (26) of the porous concrete radially surrounding the drilled hole (22), and there hardens, whereby the regions (26) radially surrounding the drilled hole (22) are substantially reinforced, and whereby the anchoring of the porous concrete screw (10) is substantially improved, since a thread (14) of the porous concrete screw (10) engages in the regions (26) that have been substantially reinforced by the hardened adhesive (24).

2. Method according to Claim 1, wherein the drilled hole (22) is filled with the adhesive (24) to between 50 % and 100 %, in particular to 75 %, or to 100 %, before the screwing-in of the porous concrete screw (10).

3. Method according to Claim 1 or 2, wherein the adhesive (24) is so inviscid that it can penetrate into sections of the porous concrete without additional compressive force.

4. Method according to one of the preceding claims, wherein the adhesive (24) is a two-component adhesive.

5. Method according to one of the preceding claims, wherein the internal diameter (I) of the drilled hole is 10 % to 20 % smaller than the core diameter (K) of the shank (12) of the porous concrete screw (10).

6. Method according to at least one of the preceding claims, **characterised by** compaction of the porous concrete in the region immediately surrounding the porous concrete screw (10) as the porous concrete screw (10) is screwed into the drilled hole.

7. Use of the method according to at least one of the preceding claims for the fastening of objects (30) by means of at least one porous concrete screw (10) to masonry or a structural component (20) of porous concrete.

8. Arrangement with masonry of porous concrete, or a structural component of porous concrete, and a porous concrete screw (10), which is screwed into a drilled hole (22) in the porous concrete, wherein before the porous concrete screw (10) is screwed into the drilled hole, an internal diameter (I) of the drilled hole (22) is smaller than, or equal to, a core diameter (K) of a shank of the porous concrete screw (10), and an adhesive (24), which, after being filled into the drilled hole (22), has been at least partially displaced from the drilled hole (22) during the screwing-in of the porous concrete screw (10) in the still fluid state, and, in the at least partially screwed-in state of the porous concrete screw (10), has penetrated into the pores of the porous concrete in the hardened state, and is arranged in regions (26) of the porous concrete, which regions radially surround the drilled hole (22), whereby the regions (26) radially surrounding the drilled hole (22) are substantially reinforced, and whereby the anchoring of the porous concrete screw (10) is substantially improved, since a thread (14) of the porous concrete screw (10) engages in the regions (26) that have been substantially reinforced by the hardened adhesive.

9. Arrangement according to Claim 8, wherein the porous concrete screw (10) is adhesively bonded to a wall of the drilled hole over its entire length located in the drilled hole (22).

10. Arrangement according to Claim 8 or 9, wherein in the screwed-in state of the porous concrete screw (10), the drilled hole is completely surrounded over its entire length by adhesive (24), which has penetrated into the porous concrete, and there hardened.

## Revendications

1. Procédé, destiné à placer une vis à béton cellulaire (10) dans du béton cellulaire, comprenant les étapes suivantes, consistant à : percer un trou (22) dans le béton cellulaire, le diamètre intérieur (I) du trou (22) étant inférieur ou égal à un diamètre d'âme (K) d'une tige de la vis à béton cellulaire (10), remplir au moins partiellement le trou (22) d'un agent adhésif (24) fluide, l'agent adhésif (24) étant d'une fluidité telle qu'il peut être pressé dans les cellules du béton cellulaire, faire pénétrer au moins partiellement en la faisant tourner la vis à béton cellulaire (10) dans le trou, de sorte que l'agent adhésif (24) fluide soit refoulé au moyen de la vis à béton cellulaire (10) au moins partiellement hors du trou (22) et soit pressé majoritairement en direction radiale vers le trou (22), dans des zones (26) du béton cellulaire entourant le trou (22) en direction radiale et s'y solidifie, suite à quoi les zones (26) entourant le trou (22) en direction radiale se renforcent nettement et suite à quoi l'ancrage de la vis à béton cellulaire (10) s'améliore nettement, car un filetage (14) de la vis à béton cellulaire (10) s'engage dans les zones (26) qui sont nettement renforcées par l'agent adhésif (24) solidifié.

2. Procédé selon la revendication 1, lors duquel, avant de visser la vis à béton cellulaire (10), l'on remplit le trou (22) à raison de 50 % à 100 %, notamment à raison de 75 % ou à raison de 100 % avec l'agent adhésif (24).

3. Procédé selon la revendication 1 ou 2, l'agent adhésif (24) étant fluide à un point tel qu'il peut pénétrer par segments dans le béton cellulaire, sans l'application d'une pression d'appui additionnelle.

4. Procédé selon l'une quelconque des revendications précédentes, l'agent adhésif (24) étant un agent adhésif bicomposants.

5. Procédé selon l'une quelconque des revendications précédentes, le diamètre intérieur (I) du trou étant inférieur de 10 % à 20 % au diamètre d'âme (K) de la tige (12) de la vis à béton cellulaire (10).

6. Procédé selon au moins l'une quelconque des revendications précédentes, **caractérisé par** le compactage du béton cellulaire dans la zone entourant directement la vis à béton cellulaire (10) lorsqu'on fait pénétrer en la tournant la vis à béton cellulaire (10) dans le trou.

7. Utilisation du procédé selon au moins l'une quelconque des revendications précédentes pour fixer des objets (30) au moyen d'au moins une vis à béton cellulaire (10) sur une maçonnerie ou sur un élément constitutif (20) en béton cellulaire.

8. Ensemble comprenant une maçonnerie en béton cellulaire ou un élément constitutif en béton cellulaire, une vis à béton cellulaire (10), qui est vissée dans un trou (22) dans le béton cellulaire, avant le vissage de la vis à béton cellulaire (10) dans le trou, un diamètre intérieur (I) du trou (22) étant inférieur ou égal à un diamètre d'âme (K) d'une tige de la vis à béton cellulaire (10), et un agent adhésif (24), qui après le remplissage dans le trou (22), lorsqu'on fait pénétrer en la faisant tourner la vis à béton cellulaire (10), a été refoulé dans l'état encore liquide au moins partiellement hors du trou (22) et dans la position au moins partiellement vissée de la vis à béton cellulaire (10), a pénétré à l'état solidifié dans les cellules du béton cellulaire et est placé dans des zones (26) du béton cellulaire qui entourent le trou (22) en direction radiale, suite à quoi les zones (26) entourant le trou (22) en direction radiale se renforcent nettement et suite à quoi l'ancrage de la vis à béton cellulaire (10) s'améliore nettement, car un filetage (14) de la vis à béton cellulaire (10) s'engage dans les zones (26) qui sont nettement renforcées par l'agent adhésif (24) solidifié.

9. Ensemble selon la revendication 8, sur toute sa longueur se trouvant dans le trou (22), la vis à béton cellulaire (10) étant collée avec une paroi du trou.

10. Ensemble selon la revendication 8 ou 9, en position vissée de la vis à béton cellulaire (10), le trou étant totalement entouré sur toute sa longueur par de l'agent adhésif (24) qui a pénétré dans le béton cellulaire et s'y est solidifié.
